# EUROPEAN PATENT APPLICATION

(11) **EP 4 621 940 A1**
(43) Date of publication of application: **24.09.2025**
(21) Application number: 23909754.6
(22) Date of filing: 16.11.2023
(51) Int. Cl.: H01M 10/6554, H01M 10/655, H01M 50/24, H01M 10/6569, H01M 10/48, H01M 50/244, H01M 10/52, H02J 7/00

(54) **ENERGY STORAGE APPARATUS, ENERGY STORAGE SYSTEM, POWER STATION AND CHARGING NETWORK**

(30) Priority: 28.12.2022 CN 202211692428
(71) Applicant: Huawei Digital Power Technologies Co., Ltd., Shenzhen, Guangdong 518043 (CN)
(72) Inventor: LI, Malin, Shenzhen, Guangdong 518043 (CN); MENG, Hao, Shenzhen, Guangdong 518043 (CN); GUO, Zhengdao, Shenzhen, Guangdong 518043 (CN); ZHOU, Kui, Shenzhen, Guangdong 518043 (CN)
(74) Representative: Epping - Hermann - Fischer
(86) International application number: PCT/CN2023/132138
(87) International publication number: WO 2024/139822

(57) **Abstract**

This application relates to the field of energy technologies, and provides an energy storage device, an energy storage system, a power plant, and a charging network, to resolve poor regulation of a temperature and humidity by a current energy storage device. The energy storage device provided in this application includes a regulation apparatus, a cabin, and a battery located in the cabin. The regulation apparatus includes a first heat exchange plate, a radiator, a dehumidification component, and a valve body component. The first heat exchange plate is disposed in the cabin and is in thermally conductive contact with the battery. The dehumidification component includes a compressor, a condenser, a first throttle, and a first evaporator that sequentially and circularly communicate with each other through a pipeline. The first evaporator is located in the cabin and is configured to condense water vapor in the cabin. The valve body component is connected between the first heat exchange plate and the radiator, and configured to connect or disconnect a path between the first heat exchange plate and the radiator. **In** an example provided in this application, the dehumidification component can effectively reduce humidity in the cabin, to help ensure use safety and reliability of the battery.

## Description

### CROSS-REFERENCE TO RELATED APPLICATIONS

This application claims priority to Chinese Patent Application No. 202211692428.8, filed with the China National Intellectual Property Administration on December 28, 2022 and entitled "ENERGY STORAGE DEVICE, ENERGY STORAGE SYSTEM, POWER PLANT, AND CHARGING NETWORK", which is incorporated herein by reference in its entirety.

### TECHNICAL FIELD

This application relates to the field of energy technologies, and in particular, to an energy storage device, an energy storage system, a power plant, and a charging network.

### BACKGROUND

With continuous development and wide application of clean energy, an energy storage device that can store electric energy starts to be widely used in a plurality of fields. In the energy storage device, a plurality of batteries connected in series and in parallel are usually placed in a cabin, so that the cabin can effectively protect the batteries. During actual use, it needs to be ensured that the battery is in a normal temperature range, to ensure charging and discharging performance and use safety of the battery. In addition, when humidity in the cabin is excessively high, some electronic components may be corroded, short-circuited, and the like. Consequently, a lifespan and safety of the battery cannot be ensured.

### SUMMARY

This application provides an energy storage device, an energy storage system, a power plant, and a charging network, to effectively regulate a temperature of a battery and humidity.

According to a first aspect, this application provides an energy storage device, including a regulation apparatus, a cabin, and a battery located in the cabin. The regulation apparatus includes a first heat exchange plate, a radiator, a dehumidification component, and a valve body component. The first heat exchange plate is disposed in the cabin, and in thermally conductive contact with the battery to exchange heat with the battery, so as to heat or cool the battery. The radiator is disposed on an outer side of the cabin, and configured to exchange heat with an external environment. The dehumidification component includes a compressor, a condenser, a first throttle, and a first evaporator that sequentially and circularly communicate with each other through a pipeline. The first evaporator is located in the cabin and is configured to condense water vapor in the cabin, and the condenser is located outside the cabin. The valve body component is connected between the first heat exchange plate and the radiator, and configured to connect or disconnect a path between the first heat exchange plate and the radiator. During actual application, the cabin, the battery located in the cabin, and the first heat exchange plate may form an independent module. The radiator may be an independent module. During deployment, the first heat exchange plate may be connected to the radiator through the valve body, so that a medium can flow between the first heat exchange plate and the radiator. This can improve deployment flexibility. In addition, in an example provided in this application, the dehumidification component may further reduce humidity in the cabin. Therefore, the battery can operate in a dry environment, to help ensure reliability and a lifespan of the battery.

In an example, the valve body component may be further connected between the radiator and the condenser, and is configured to connect or disconnect a path between the radiator and the condenser. When the valve body component connects the path between the radiator and the condenser, effective heat exchange may be performed between the radiator and the condenser.

In an example, the regulation apparatus may further include a humidity detector and a controller. The humidity detector is disposed in the cabin and is configured to detect humidity in the cabin. The controller is communicatively connected to the humidity detector, the first throttle, and the compressor, and the controller is configured to control, based on a detection signal of the humidity detector, the first throttle to be opened or closed and the compressor to be enabled or disabled, to automatically enable or disable dehumidification.

In an example, the regulation apparatus may further include a second evaporator and a second throttle. The condenser, the second throttle, the second evaporator, and the compressor sequentially and cyclically communicate with each other through a pipeline. The valve body component is further connected between the condenser and the first heat exchange plate, and is configured to connect or disconnect a path between the condenser and the first heat exchange plate. When the valve body component connects the path between the condenser and the first heat exchange plate, effective heat exchange may be performed between the condenser and the first heat exchange plate.

In an example, the valve body component may be further connected between the second evaporator and the first heat exchange plate, and is configured to connect or disconnect a path between the second evaporator and the first heat exchange plate. When the valve body component connects the path between the second evaporator and the first heat exchange plate, effective heat exchange may be performed between the second evaporator and the first heat exchange plate.

In an example, the regulation apparatus may further include a second heat exchange plate and a power conversion system, and the second heat exchange plate is in thermally conductive contact with the power conversion system. The power conversion system may be connected to the battery, and is configured to control charging or discharging of the battery.

In an example, the valve body component may be further connected between the second heat exchange plate and the first heat exchange plate, and is configured to connect or disconnect a path between the first heat exchange plate and the second heat exchange plate. When the valve body component connects the path between the first heat exchange plate and the second heat exchange plate, effective heat exchange may be implemented between the first heat exchange plate and the second heat exchange plate.

In an example, the valve body component may be further connected between the second heat exchange plate and the radiator, and is configured to connect or disconnect a path between the second heat exchange plate and the radiator. When the valve body component connects the path between the second heat exchange plate and the radiator, effective heat exchange may be performed between the second heat exchange plate and the radiator.

In an example, the valve body component is further connected between the second heat exchange plate and the condenser, and is configured to connect or disconnect a path between the second heat exchange plate and the condenser. When the valve body component connects the path between the second heat exchange plate and the condenser, effective heat exchange may be performed between the second heat exchange plate and the condenser.

In an example, the second heat exchange plate, the condenser, and the valve body component may be connected in series. In other words, the second heat exchange plate and the condenser may be integrated and disposed in a same pipeline, to facilitate interconnection with the valve body component. This can reduce a quantity of ports of the valve body component.

In an example, the regulation apparatus may further include an electric heater, and the electric heater is configured to heat a medium flowing through the first heat exchange plate.

During specific disposing, there may be one, two, or more valve bodies in the valve body component. Each valve body has a plurality of ports, and each port can be connected to or disconnected from at least one of other ports.

According to a second aspect, this application further provides an energy storage system, including an inverter and the foregoing energy storage device. The inverter is electrically connected to the battery, and is configured to: convert an alternating current into a direct current and provide the direct current for the battery, or convert a direct current from the battery into an alternating current. The energy storage device can effectively improve moisture-proof performance of the energy storage system, and has advantages of high reliability and a long lifespan.

According to a third aspect, this application further provides a power plant, including a power generation device and the foregoing energy storage device. The power generation device is electrically connected to a battery of the energy storage device, and the power generation device is configured to store generated electric energy into a battery of the energy storage device. The energy storage device can effectively improve moisture-proof performance of an energy storage system, and has advantages of high reliability and a long lifespan.

According to a fourth aspect, this application further provides a charging network, including a charging pile and the foregoing energy storage device. The charging pile is electrically connected to a battery of the energy storage device, and the battery is configured to provide electric energy for the charging pile. The energy storage device can effectively improve moisture-proof performance of an energy storage system, and has advantages of high reliability and a long lifespan.

### BRIEF DESCRIPTION OF DRAWINGS

FIG. 1 is a simple diagram of a structure of a conventional energy storage device;
FIG. 2 is a simple diagram of a structure of an energy storage device according to an embodiment of this application;
FIG. 3 is a block diagram of a structure of an energy storage device according to an embodiment of this application;
FIG. 4 is a block diagram of a structure of another energy storage device according to an embodiment of this application;
FIG. 5 is a block diagram of a structure of another energy storage device according to an embodiment of this application;
FIG. 6 is a diagram that shows a flowing path of a medium in an energy storage device according to an embodiment of this application;
FIG. 7 is another diagram that shows a flowing path of a medium in an energy storage device according to an embodiment of this application;
FIG. 8 is another diagram that shows a flowing path of a medium in an energy storage device according to an embodiment of this application;
FIG. 9 is another diagram that shows a flowing path of a medium in an energy storage device according to an embodiment of this application;
FIG. 10 is another diagram that shows a flowing path of a medium in an energy storage device according to an embodiment of this application;
FIG. 11 is another diagram that shows a flowing path of a medium in an energy storage device according to an embodiment of this application;
FIG. 12 is another diagram that shows a flowing path of a medium in an energy storage device according to an embodiment of this application;
FIG. 13 is another diagram that shows a flowing path of a medium in an energy storage device according to an embodiment of this application;
FIG. 14 is a diagram that shows a flowing path of a medium in an energy storage device according to an embodiment of this application;
FIG. 15 is another diagram that shows a flowing path of a medium in an energy storage device according to an embodiment of this application;
FIG. 16 is another diagram that shows a flowing path of a medium in an energy storage device according to an embodiment of this application;
FIG. 17 is another diagram that shows a flowing path of a medium in an energy storage device according to an embodiment of this application;
FIG. 18 is another diagram that shows a flowing path of a medium in an energy storage device according to an embodiment of this application;
FIG. 19 is a diagram that shows a flowing path of a medium in an energy storage device according to an embodiment of this application;
FIG. 20 is another diagram that shows a flowing path of a medium in an energy storage device according to an embodiment of this application;
FIG. 21 is another diagram that shows a flowing path of a medium in an energy storage device according to an embodiment of this application;
FIG. 22 is another diagram that shows a flowing path of a medium in an energy storage device according to an embodiment of this application;
FIG. 23 is another diagram that shows a flowing path of a medium in an energy storage device according to an embodiment of this application;
FIG. 24 is another diagram that shows a flowing path of a medium in an energy storage device according to an embodiment of this application;
FIG. 25 is a block diagram of a structure of an energy storage system according to an embodiment of this application;
FIG. 26 is a block diagram of a structure of a power plant according to an embodiment of this application; and
FIG. 27 is a block diagram of a structure of a charging network according to an embodiment of this application.

### DESCRIPTION OF EMBODIMENTS

To make the objectives, technical solutions, and advantages of this application clearer, the following further describes this application in detail with reference to the accompanying drawings. To facilitate understanding of an energy storage device provided in embodiments of this application, the following first describes an application scenario for the energy storage device. The energy storage device provided in embodiments of this application may be used in scenarios such as home energy storage, industrial energy storage, a data center, a power plant, and vehicle charging, and is configured to store and release electric energy.

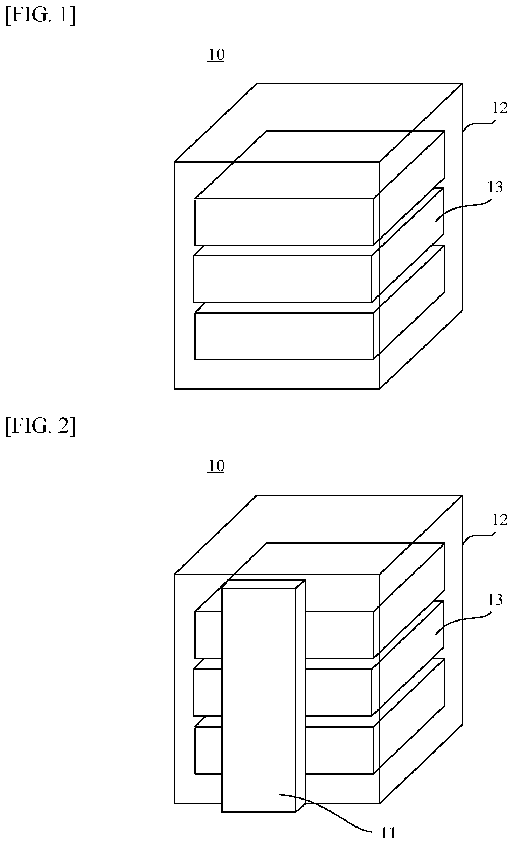

As shown in FIG. 1, an energy storage device 10 may include a cabin 12 and a plurality of batteries 13 disposed in the cabin 12. The cabin 12 can provide enough accommodation space for the batteries 13, to prevent the batteries 13 from being affected by sunlight, rain, and the like. This improves safety and a lifespan of the battery 13. In addition, the batteries 13 are disposed in the cabin 12, to further improve deployment convenience. During actual application, the cabin 12 may be disposed at a required mounting position based on an actual deployment requirement.

In charging and discharging processes of the battery 13, a large amount of heat is generated. Therefore, the battery 13 needs to be cooled. Currently, the battery 13 is mainly cooled in two manners: air cooling and liquid cooling. In the air cooling manner, heat on a surface of the battery 13 is dissipated mainly through flow of the air, which has a disadvantage of low heat dissipation efficiency. In addition, dust in the air continuously accumulates on the surface of the battery 13, and corrodes the battery 13, which is not conducive to reliability and a lifespan of the battery 13. In the liquid cooling manner, heat of the battery 13 is mainly dissipated through a medium (for example, water) flowing in a cooling pipeline, which has a feature of high heat dissipation efficiency. Therefore, more manufacturers start to dissipate heat from the battery 13 in the liquid cooling manner. However, in the liquid cooling manner, water vapor in the cabin 12 is not easily discharged. After the water vapor exists in the cabin 12 for long time, the battery 13 and a related electronic component are corroded, short-circuited, and the like, which affects safety and a lifespan of the energy storage device 10. In some current energy storage devices 10, activated carbon or a desiccant is usually placed in the cabin 12 to reduce humidity in the cabin 12. However, this manner is not suitable for long-term use, and increases a frequency of maintaining the energy storage device 10 by a worker.

Therefore, embodiments of this application provide an energy storage device 10 that can effectively regulate a temperature of a battery 13 and humidity in the cabin 12.

To make the objectives, technical solutions, and advantages of this application clearer, the following further describes this application in detail with reference to the accompanying drawings and specific embodiments.

Terms used in the following embodiments are merely intended to describe specific embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with the embodiment. Therefore, in this specification, statements, such as "in an embodiment", "in some embodiments", and "in other embodiments", that appear at different places do not necessarily mean referring to a same embodiment, instead, the statements mean referring to "one or more but not all of embodiments", unless otherwise specifically emphasized in other ways. Terms "include", "have", and variants of the terms all mean "include but are not limited to", unless otherwise specifically emphasized in other ways.

As shown in FIG. 2, in an example provided in this application, the energy storage device 10 includes the cabin 12, the battery 13 located in the cabin 12, and a regulation apparatus 11. The regulation apparatus 11 may effectively regulate a temperature of the battery 13, and further reduce humidity of the air in the cabin 12.

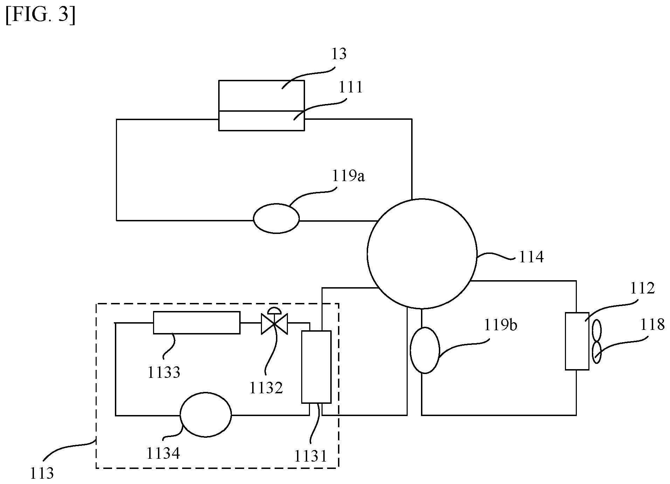

As shown in FIG. 3, the regulation apparatus 11 may include a first heat exchange plate 111, a radiator 112, a dehumidification component 113, and a valve body 114. Specifically, the first heat exchange plate 111 is disposed in the cabin 12, and in thermally conductive contact with the battery 13 to exchange heat with the battery 13. The radiator 112 is disposed on an outer side of the cabin 12, and may be configured to exchange heat with the first heat exchange plate 111. In addition, the valve body 114 is connected between the first heat exchange plate 111 and the radiator 112, and configured to connect or disconnect a path between the first heat exchange plate 111 and the radiator 112. After the valve body 114 connects the path between the first heat exchange plate 111 and the radiator 112, heat of the first heat exchange plate 111 may be transferred to the radiator 112 through a pipeline, to effectively cool the battery 13.

Alternatively, it may be understood that, during actual application, the cabin 12, the battery 13 located in the cabin 12, and the first heat exchange plate 111 may form an independent module. The radiator 112 may be an independent module. During deployment, the first heat exchange plate 111 may be connected to the radiator 112 through the valve body 114, so that a medium can flow between the first heat exchange plate 111 and the radiator 112. This can improve deployment flexibility.

In addition, in an example provided in this application, the dehumidification component 113 may further reduce humidity in the cabin 12.

Specifically, the dehumidification component 113 may include a compressor 1134, a condenser 1131, a first throttle 1132, and a first evaporator 1133 that sequentially communicate with each other through a circular pipeline. The first evaporator 1133 is located in the cabin 12 and is configured to condense water vapor in the cabin 12. When the medium circularly flows in the path including the compressor 1134, the condenser 1131, the first throttle 1132, and the first evaporator 1133, a temperature of the first evaporator 1133 is low, so that the water vapor in the cabin 12 can be condensed into water. This reduces humidity in the cabin 12.

In addition, because the temperature of the first evaporator 1133 is low, a temperature of the air in the cabin 12 may be further reduced. Therefore, the battery 13 in the cabin 12 is in a low-temperature environment.

Alternatively, it may be understood that, in the energy storage device 10 provided in this application, the path between the first heat exchange plate 111 and the radiator 112 can effectively reduce a temperature of a surface of the battery 13. In addition, the temperature of the first evaporator 1133 in the dehumidification component 113 is low, to effectively reduce the temperature of the air in the cabin 12. This can effectively improve heat dissipation effect on the battery 13. In addition, the first evaporator 1133 in the dehumidification component 113 can further condense the water vapor in the cabin 12, to reduce humidity of the air in the cabin 12. Therefore, the battery 13 can operate in a dry environment. This helps ensure reliability and a lifespan of the battery 13.

During specific disposing, the energy storage device 10 may further include a humidity detector (not shown in the figure) and a controller (not shown in the figure). The humidity detector may be disposed in the cabin 12 and is configured to detect humidity in the cabin 12. The controller is communicatively connected to the humidity detector, the first throttle 1132, and the compressor 1134, and the controller is configured to control, based on a detection signal of the humidity detector, the first throttle 1132 to be opened or closed and the compressor 1134 to be enabled or disabled. For example, when detecting that the humidity in the cabin 12 is greater than a first preset value, the humidity detector may generate a corresponding first detection signal. The controller may open the first throttle 1132 and enable the compressor 1134 for dehumidification based on the first detection signal. As the humidity in the cabin 12 gradually decreases, when detecting that the humidity in the cabin 12 is less than a second preset value, the humidity detector may generate a corresponding second detection signal. The controller may close the first throttle 1132 and disable the compressor 1134 to stop dehumidification based on the second detection signal. It may be understood that the first preset value is a threshold indicating that humidity of the air in the cabin 12 is high and dehumidification needs to be performed, and the second preset value is a threshold indicating that humidity of the air in the cabin 12 is low and dehumidification does not need to be performed. During actual application, the first preset value and the second preset value may be set by a manufacturer before delivery, or may be set by a user. This is not limited in this application.

In addition, as shown in FIG. 3, during specific disposing, the valve body 114 may be further connected between the radiator 112 and the condenser 1131, and configured to connect or disconnect a path between the radiator 112 and the condenser 1131. When the dehumidification component 113 performs dehumidification, a temperature of the condenser 1131 is high. Therefore, the condenser 1131 may communicate with the radiator 112 through the valve body 114, so that the radiator 112 can cool the condenser 1131, and the temperature of the condenser 1131 is reduced. This can prevent the temperature of the condenser 1131 from being excessively high.

During specific disposing, a fan 118 may be disposed near the radiator 112, and the fan 118 may be configured to accelerate a flow speed of the air flowing through the radiator 112, to improve heat dissipation performance of the radiator 112. It is clear that, in another example, the fan 118 may alternatively be disposed near the condenser 1131. This is not limited in this application.

In addition, in an example provided in this application, two water pumps: a water pump 119a and a water pump 119b are further disposed in the regulation apparatus 11. The water pump 119a is disposed at one end of the first heat exchange plate 111, and configured to accelerate a flow speed of a medium flowing through the first heat exchange plate 111, to improve heat exchange efficiency of the first heat exchange plate 111. The water pump 119b is disposed at one end of the radiator 112, and configured to accelerate a flow speed of a medium flowing through the radiator 112, to improve heat dissipation efficiency of the radiator 112. It may be understood that, during actual application, positions of the water pump 119a and the water pump 119b may be flexibly disposed. For example, the positions of the water pump 119a and the water pump 119b are not limited in this application, provided that the water pump 119a can accelerate the flow speed of the medium flowing through the first heat exchange plate 111, and the water pump 119b can accelerate the flow speed of the medium flowing through the radiator 112. In addition, in some examples, when the water pump 119a and the water pump 119b are located in a same circulation path, one water pump may be selectively removed, to reduce a quantity of used water pumps. Details are not described herein.

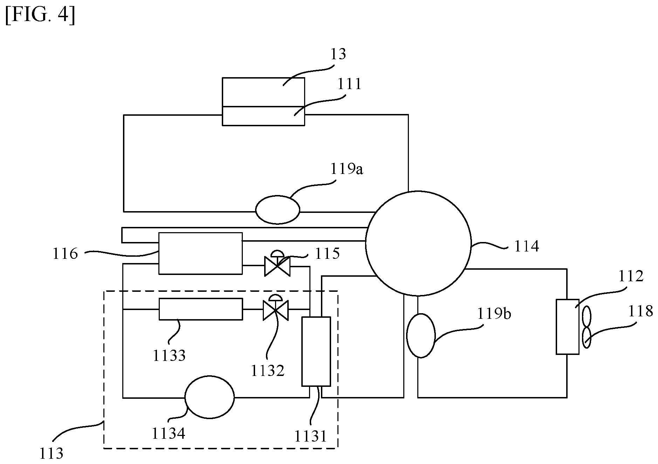

In addition, as shown in FIG. 4, in an example provided in this application, the regulation apparatus 11 may further include a second evaporator 116 and a second throttle 115. The compressor 1134, the condenser 1131, the second throttle 115, and the second evaporator 116 sequentially and cyclically communicate with each other a pipeline. The valve body 114 is further connected between the second evaporator 116 and the first heat exchange plate 111, and configured to connect or disconnect a path between the second evaporator 116 and the first heat exchange plate 111. When the path between the second evaporator 116 and the first heat exchange plate 111 is in a connected state, the second evaporator 116 may cool the first heat exchange plate 111, to improve a heat dissipation capability of the battery 13.

Alternatively, it may be understood that, in an example provided in this application, a combination of the second evaporator 116 and the second throttle 115 and a combination of the first evaporator 1133 and the first throttle 1132 are disposed in parallel, so that the two combinations do not affect each other. Specifically, during dehumidification, the first throttle 1132 may be opened, and the second throttle 115 may be closed, so that a refrigerant medium may circulate in a path including the compressor 1134, the condenser 1131, the first throttle 1132, and the first evaporator 1133. Therefore, the first evaporator 1133 has a low temperature, to implement a dehumidification function. In addition, both the first throttle 1132 and the second throttle 115 may be opened. In other words, the refrigerant medium may circulate in the path including the compressor 1134, the condenser 1131, the first throttle 1132, and the first evaporator 1133, and can further circulate in a path including the compressor 1134, the condenser 1131, the second throttle 115, and the second evaporator 116. Therefore, both the first evaporator 1133 and the second evaporator 116 have low temperatures, that is, the first evaporator 1133 can implement a dehumidification function, and the second evaporator 116 can implement a function of cooling the battery 13 (the first heat exchange plate 111). It is clear that, during implementation, the second throttle 115 may be opened, and the first throttle 1132 may be closed, so that the refrigerant medium may circulate in the path including the compressor 1134, the condenser 1131, the second throttle 115, and the second evaporator 116. Therefore, the second evaporator 116 has a low temperature, to implement the function of cooling the battery 13 (the first heat exchange plate 111).

In summary, in the example provided in this application, the first evaporator 1133 and the second evaporator 116 that are in the regulation apparatus 11 are decoupled from each other, so that the first evaporator 1133 and the second evaporator 116 do not affect each other.

In addition, in the example provided in this application, the combination of the first evaporator 1133 and the first throttle 1132 and the combination of the second evaporator 116 and the second throttle 115 share the same condenser 1131 and compressor 1134, to effectively reduce a quantity of used elements. This helps reduce a size and costs of the regulation apparatus, and facilitates implementation of an integrated design. It is clear that, in another example, the first evaporator 1133 and the second evaporator 116 may alternatively be disposed in series, so that the first evaporator 1133 and the second evaporator 116 may share a same throttle. For example, only the first throttle 1132 or the second throttle 115 may be disposed, to reduce a quantity of used elements. This helps reduce manufacturing costs.

In addition, in an example provided in this application, the battery 13 may be further heated based on a principle of a heat pump.

Specifically, as shown in FIG. 4, in the example provided in this application, the valve body 114 is further connected between the condenser 1131 and the first heat exchange plate 111, and configured to connect or disconnect a path between the condenser 1131 and the first heat exchange plate 111. When the path between the condenser 1131 and the first heat exchange plate 111 is in a connected state, heat of the condenser 1131 may be transferred to the first heat exchange plate 111 through a medium, to heat the battery 13.

In summary, in the example provided in this application, connected and disconnected states of different ports of the valve body 114 may be effectively regulated, to flexibly adjust connected states of different modules, so as to adjust the temperature of the battery 13 from a plurality of aspects.

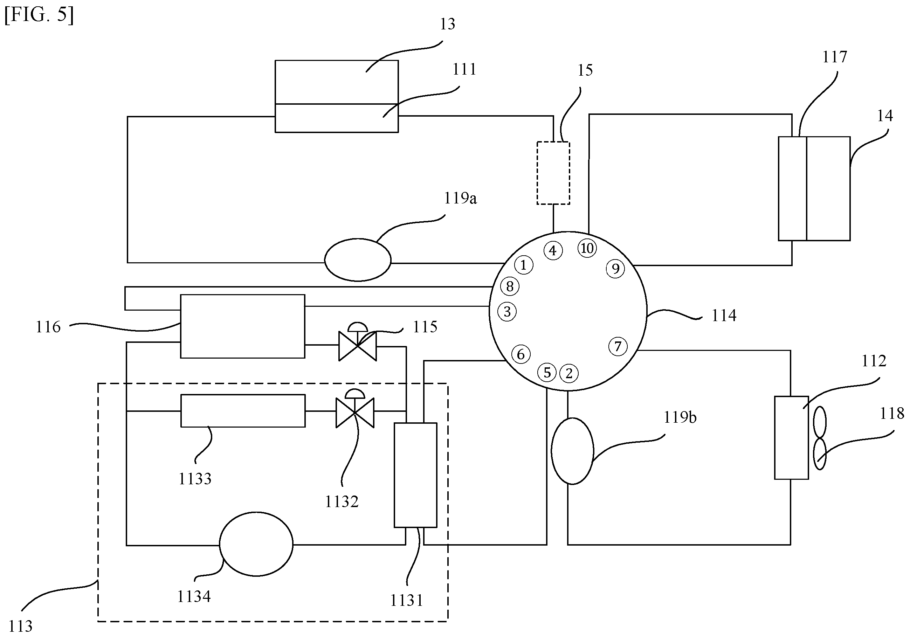

In addition, as shown in FIG. 5, in an example provided in this application, a second heat exchange plate 117 and a power conversion system 14 are further included, and the second heat exchange plate 117 is in thermally conductive contact with the power conversion system 14 to dissipate heat from the power conversion system 14. The power conversion system 14 is connected to the battery 13, and configured to control a charging or discharging function of the battery 13. The power conversion system may be specifically a direct current-alternating current converter, or may be a direct current-direct current converter. To be specific, the power conversion system 14 may include a direct current-alternating current conversion component, or may include a direct current-direct current conversion component, a control unit, and the like. During specific application, a specific type of the power conversion system 14 may be properly selected based on an actual requirement. This is not limited in this application.

As shown in FIG. 5, during specific application, the valve body 114 may be further connected between the second heat exchange plate 117 and the first heat exchange plate 111, and is configured to connect or disconnect a path between the second heat exchange plate 117 and the first heat exchange plate 111. Because the power conversion system 14 generates heat during operation, when the temperature of the battery 13 is low, the heat may be transferred to the surface of the battery 13 through the path between the first heat exchange plate 111 and the second heat exchange plate 117, to properly use waste heat generated by the power conversion system 14, and implement efficient use of heat.

In addition, the valve body 114 component may be further connected between the second heat exchange plate 117 and the radiator 112, and is configured to connect or disconnect a path between the second heat exchange plate 117 and the radiator 112. During actual application, when heat generated by the power conversion system 14 is high, the heat may be transferred to the radiator 112 through the path between the second heat exchange plate 117 and the radiator 112, to improve heat dissipation performance of the power conversion system 14. Therefore, the power conversion system 14 can operate within a normal temperature range.

Alternatively, in some examples, the valve body 114 component may be further connected between the second heat exchange plate 117 and the radiator 112, and is configured to connect or disconnect a path between the second heat exchange plate 117 and the radiator 112. During actual application, when heat generated by the power conversion system 14 is high, the heat may be transferred to the radiator 112 through the path between the second heat exchange plate 117 and the radiator 112, to improve heat dissipation performance of the power conversion system 14. Therefore, the power conversion system 14 can operate within a normal temperature range.

Alternatively, as shown in FIG. 5, in an example provided in this application, the regulation apparatus 11 further includes an electric heater 15, and the electric heater 15 is configured to heat a medium flowing through the first heat exchange plate 111 to increase the temperature of the surface of the battery 13. During specific disposing, the electric heater 15 may be disposed in various positions. For example, as shown in the figure, the electric heater 15 may be disposed in series at one end of the first heat exchange plate 111 or the second evaporator 116. Alternatively, in another example, the electric heater 15 may be located in an independent pipeline, and two ends of the pipeline may be connected to the valve body 114, so that the pipeline can communicate with the first heat exchange plate 111.

It should be noted that, in an example provided in this application, the valve body 114 is a ten-port valve, that is, the valve body 114 has ten ports, and each port can be connected to or disconnected from at least one of other ports. Alternatively, it may be understood that each port can be connected to or disconnected from any other port, and each port can be connected to at least two ports.

During actual application, connected states of different ports of the valve body 114 may be effectively adjusted based on an actual requirement. For ease of understanding, each port of the valve body 114 is distinguished by a number.

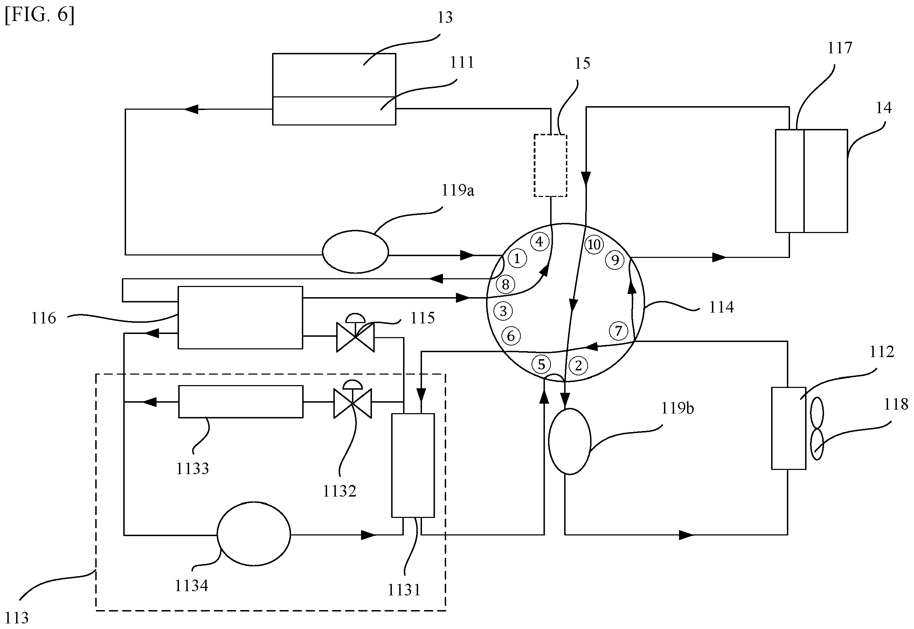

As shown in FIG. 6, in an example provided in this application, when a temperature of an environment is high (for example, a high temperature and high humidity in summer), an operating mode of the regulation apparatus 11 is as follows:
Specifically, in FIG. 6, five circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the second evaporator 116 may be at a low temperature, to cool the first heat exchange plate 111 (or the battery 13). A flowing path of a refrigerant medium is sequentially: the compressor 1134, the condenser 1131, the second throttle 115, and the second evaporator 116.

In the third circulation path, the second evaporator 116 may cool the first heat exchange plate 111. A flowing path of a medium is sequentially: the first heat exchange plate 111, the water pump 119a, a port 1, a port 8, the second evaporator 116, a port 3, and a port 4.

In the fourth circulation path, the radiator 112 may cool the second heat exchange plate 117. A flowing path of a medium is sequentially: the second heat exchange plate 117, a port 10, a port 2, the water pump 119b, the radiator 112, a port 7, and a port 9.

In the fifth circulation path, the radiator 112 may cool the condenser 1131. A flowing path of a medium is sequentially: the condenser 1131, a port 5, the port 2, the water pump 119b, the radiator 112, the port 7, and a port 6.

It should be noted that, in the foregoing examples, the electric heater 15 is in an off state.

In addition, in another example, the radiator 112 may alternatively cool the first heat exchange plate 111. For example, the port 7 of the valve body 114 may be connected to the port 4, and the port 1 may be connected to the port 2. In this case, a flowing path of a medium further includes: the first heat exchange plate 111, the water pump 119a, the port 1, the port 2, the water pump 119b, the radiator 112, the port 7, and the port 4. Therefore, the medium can circulate between the first heat exchange plate 111 and the radiator 112, to dissipate heat from the first heat exchange plate 111 by using the radiator 112.

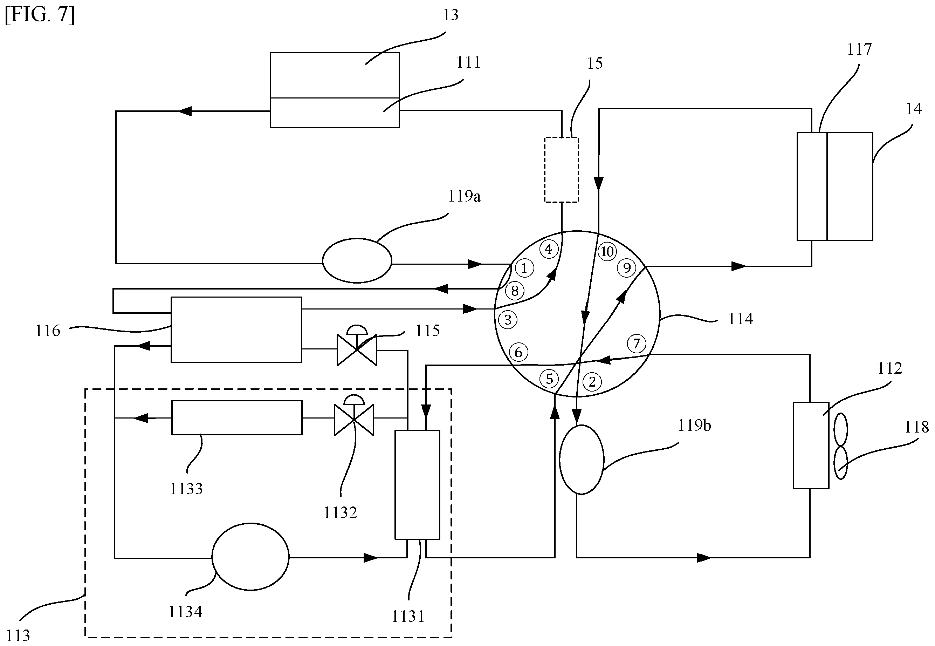

In addition, as shown in FIG. 7, in another example provided in this application, when a temperature of an environment is high (for example, a high temperature and high humidity in summer), an operating mode of the regulation apparatus 11 may alternatively be as follows:
Specifically, in FIG. 7, four circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the second evaporator 116 may be at a low temperature, to cool the first heat exchange plate 111 (or the battery 13). A flowing path of a refrigerant medium is sequentially: the compressor 1134, the condenser 1131, the second throttle 115, and the second evaporator 116.

In the third circulation path, the second evaporator 116 may cool the first heat exchange plate 111. A flowing path of a medium is sequentially: the first heat exchange plate 111, the water pump 119a, the port 1, the port 8, the second evaporator 116, the port 3, and the port 4.

In the fourth circulation path, the radiator 112 may cool the condenser 1131 and the second heat exchange plate 117. A flowing path of a medium is sequentially: the second heat exchange plate 117, the port 10, the port 2, the water pump 119b, the radiator 112, the port 7, the port 6, the condenser 1131, the port 5, and the port 9.

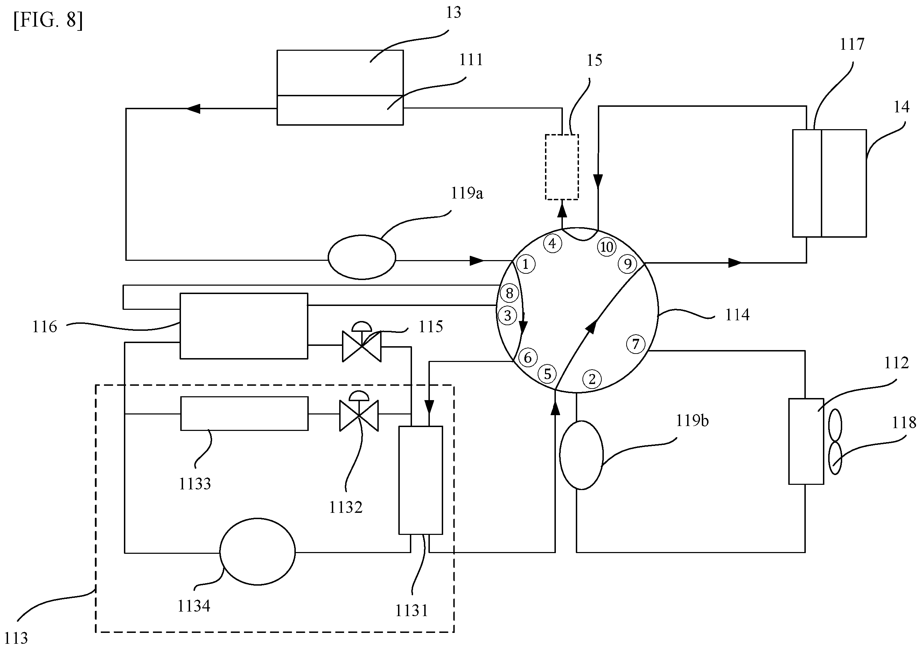

In addition, as shown in FIG. 8, in another example provided in this application, when a temperature of an environment is low (for example, a low temperature in winter), an operating mode of the regulation apparatus 11 is as follows:
Specifically, in FIG. 8, one circulation path is shown. The second heat exchange plate 117 may heat the first heat exchange plate 111 (or the battery 13). A flowing path of a medium is sequentially: the first heat exchange plate 111, the water pump 119a, the port 1, the port 6, the condenser 1131, the port 5, the port 9, the second heat exchange plate 117, the port 10, and the port 4. Heat generated by the power conversion system 14 may also be transferred to the first heat exchange plate 111 (or the battery 13), to efficiently use the heat. The electric heater 15 may be turned on or turned off as required. Details are not described herein.

In addition, it should be noted that, during actual application, the second throttle 115 may be set to an open state and the compressor 1134 may be set to an enabled state based on a requirement. In other words, based on a working principle of the heat pump, the condenser 1131 may be at a high temperature, to provide heat energy for the first heat exchange plate 111.

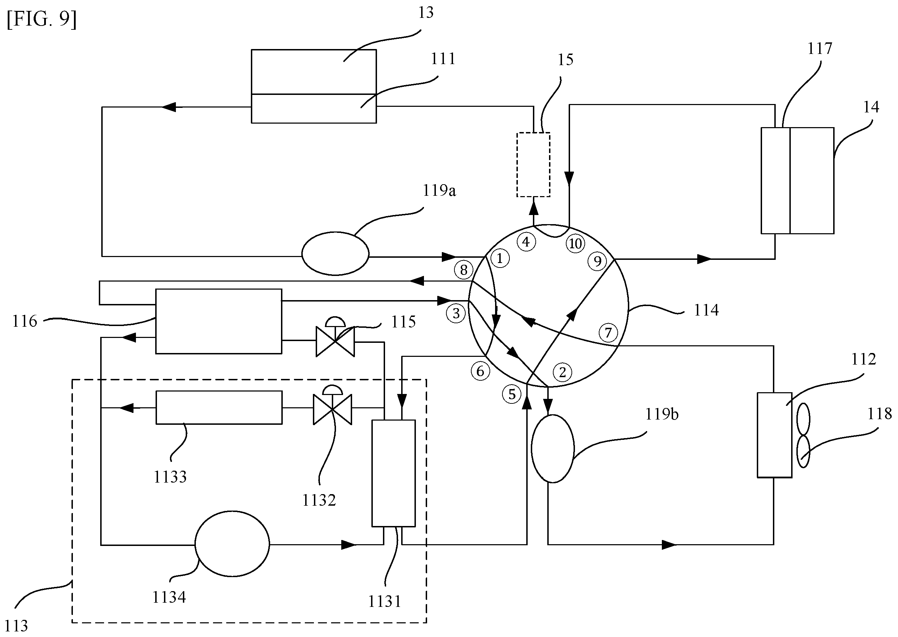

Alternatively, as shown in FIG. 9, in another example provided in this application, when a temperature of an environment is low (for example, a low temperature and high humidity in winter), an operating mode of the regulation apparatus 11 is as follows:
Specifically, in FIG. 9, five circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, a heat pump mode is enabled. The condenser 1131 is at a high temperature, to provide heat for the first heat exchange plate 111 (or the battery 13). A flowing path of a refrigerant medium is sequentially: the compressor 1134, the condenser 1131, the second throttle 115, and the second evaporator 116.

In the third circulation path, the condenser 1131 and the second heat exchange plate 117 may heat the first heat exchange plate 111. A flowing path of a medium is sequentially: the first heat exchange plate 111, the water pump 119a, the port 1, the port 6, the condenser 1131, the port 5, the port 9, the second heat exchange plate 117, the port 10, and the port 4.

In the fourth circulation path, the radiator 112 may heat the second evaporator 116. A flowing path of a medium is sequentially: the second evaporator 116, the port 3, the port 2, the water pump 119b, the radiator 112, the port 7, and the port 8. It may be understood that, in the heat pump mode, heat in an environment may be transferred to the condenser 1131 through the second evaporator 116. Therefore, the second evaporator 116 is at a low temperature. The temperature of the second evaporator 116 is increased, to dissipate cold of the second evaporator 116. In one aspect, the electric heater 15 may increase the temperature of the second evaporator 116. In another aspect, heat of the second evaporator 116 may be increased through heat exchange between the radiator 112 and the second evaporator 116.

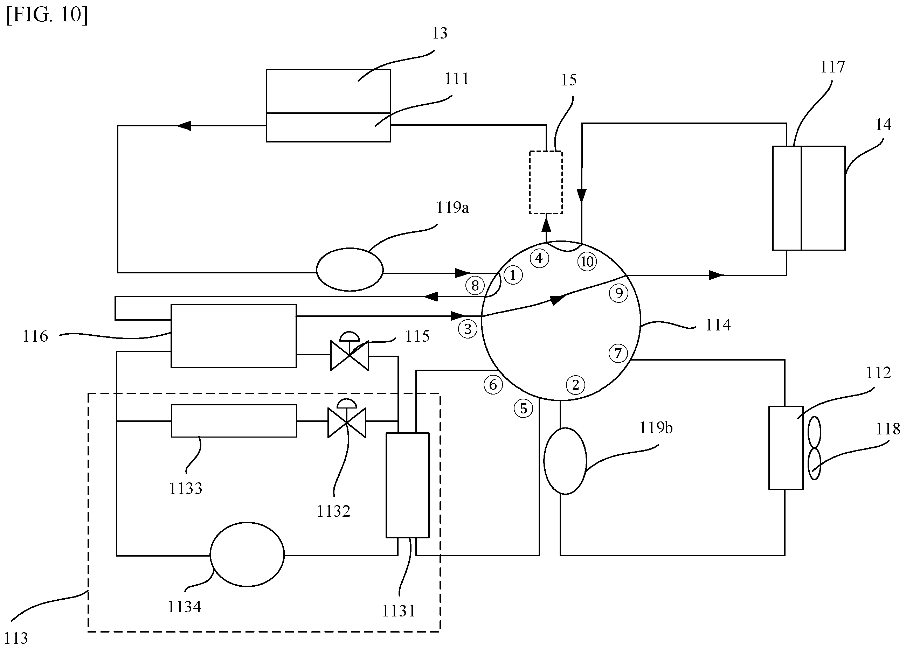

In addition, as shown in FIG. 10, in another example provided in this application, when a temperature of an environment is low (for example, a low temperature in winter), an operating mode of the regulation apparatus 11 is as follows:
Specifically, in FIG. 10, one circulation path is shown. The electric heater 15 and the second heat exchange plate 117 may heat the first heat exchange plate 111 (or the battery 13). A flowing path of a medium is sequentially: the first heat exchange plate 111, the water pump, the port 1, the port 8, the electric heater 15, the second evaporator 116, the port 8, the port 9, the second heat exchange plate 117, the port 10, and the port 4.

It should be noted that, in this case, the second throttle 115 is in a closed state. Therefore, when the medium flows through the second evaporator 116, the temperature basically does not change. In addition, in the example provided in this application, the electric heater 15 and the second evaporator 116 are disposed in series in a same pipeline, to effectively reduce a quantity of ports of the valve body 114. Alternatively, it may be understood that, if both the electric heater 15 and the second evaporator 116 are connected to the valve body 114 through separate pipelines, two more ports need to be added to the valve body 114. Consequently, a quantity of ports of the valve body 114 is increased.

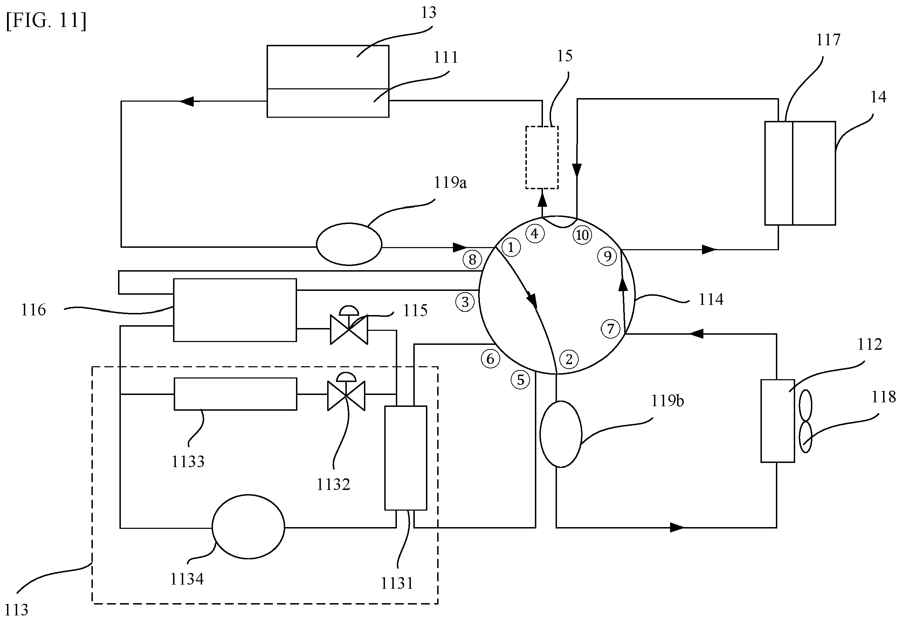

In addition, as shown in FIG. 11, in another example provided in this application, when a temperature of an environment is appropriate (for example, in spring or fall), an operating mode of the regulation apparatus 11 is as follows:
Specifically, in FIG. 11, one circulation path is shown. The radiator 112 may dissipate heat from the first heat exchange plate 111 (or the battery 13) and the second heat exchange plate 117 (or the power conversion system 14). A flowing path of a medium is sequentially: the first heat exchange plate 111, the water pump 119a, the port 1, the port 2, the water pump 119b, the radiator 112, the port 7, the port 9, the second heat exchange plate 117, the port 10, and the port 4.

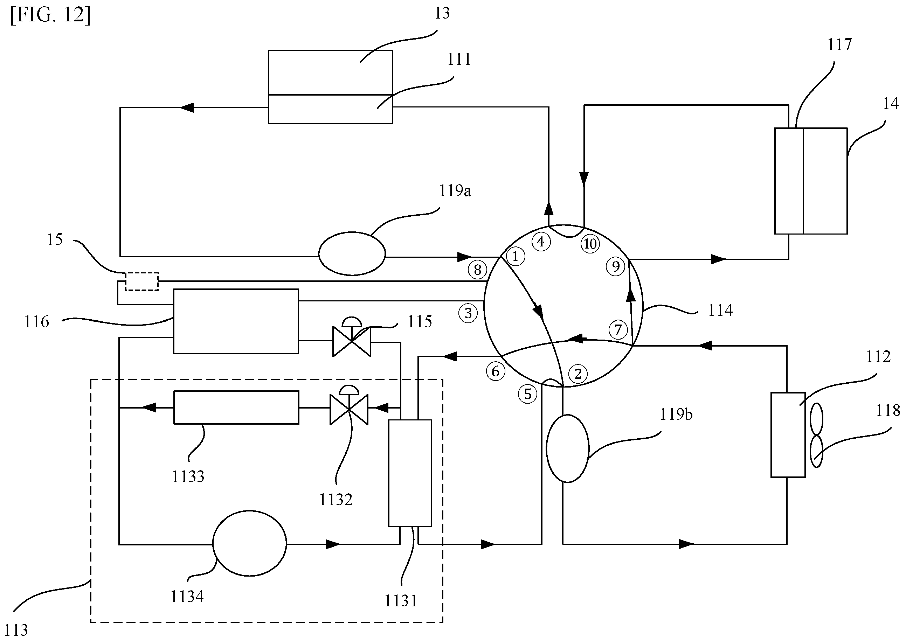

In addition, as shown in FIG. 12, in another example provided in this application, when an environment is at an appropriate temperature (for example, in spring or fall) and of high humidity, an operating mode of the regulation apparatus 11 is as follows:
Specifically, in FIG. 12, three circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the radiator 112 may dissipate heat from the condenser 1131. A flowing path of a medium is sequentially: the condenser 1131, the port 5, the port 2, the water pump 119b, the radiator 112, the port 7, and the port 6.

In the third circulation path, the radiator 112 may dissipate heat from the first heat exchange plate 111 (or the battery 13) and the second heat exchange plate 117 (or the power conversion system 14). A flowing path of a medium is sequentially: the first heat exchange plate 111, the water pump 119a, the port 1, the port 2, the water pump 119b, the radiator 112, the port 7, the port 9, the second heat exchange plate 117, the port 10, and the port 4.

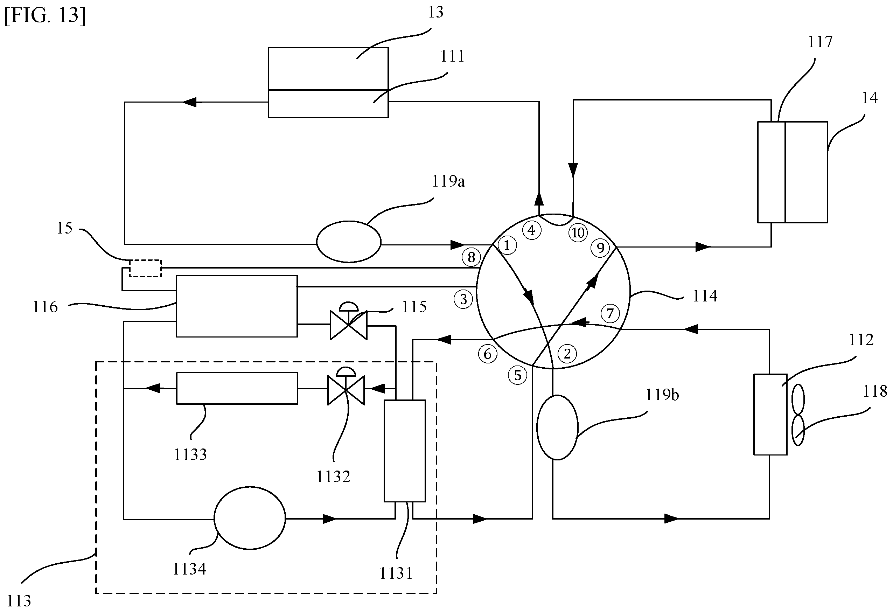

In addition, as shown in FIG. 13, in another example provided in this application, when an environment is at an appropriate temperature (for example, in spring or fall) and of high humidity, an operating mode of the regulation apparatus 11 is as follows:
Specifically, in FIG. 13, two circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the radiator 112 may dissipate heat from the first heat exchange plate 111 (or the battery 13), the second heat exchange plate 117 (or the power conversion system 14), and the condenser 1131. A flowing path of a medium is sequentially: the condenser 1131, the port 5, the port 9, the second heat exchange plate 117, the port 10, the port 4, the first heat exchange plate 111, the water pump 119a, the port 1, the port 2, the water pump 119b, the radiator 112, the port 7, and the port 6.

It may be understood that, in the example provided in this application, the first heat exchange plate 111 and the water pump 119a are disposed in series in a same pipeline, and the pipeline is connected through the port 4 and the port 1 of the valve body 114. Therefore, during actual application, the port 1 may be connected to at least one other port based on an actual requirement, or the port 4 may be connected to at least one other port, to flexibly select a flowing path of the medium flowing through the first heat exchange plate 111.

In addition, in another example, the water pump 119a and the first heat exchange plate 111 may alternatively be connected to the valve body 114 through separate pipelines. Details are not described herein. In addition, alternatively, interconnected states of different ports of the valve body 114 may be adaptively adjusted based on an actual requirement, to form a required flowing path of the medium. In addition, the valve body 114 may alternatively have more than ten ports, to reserve a port for connecting to another pipeline. This helps improve flexibility of the regulation apparatus 11.

In addition, in some examples, a quantity of ports of the valve body 114 may alternatively be appropriately reduced. In other words, some elements may be disposed in series for integration.

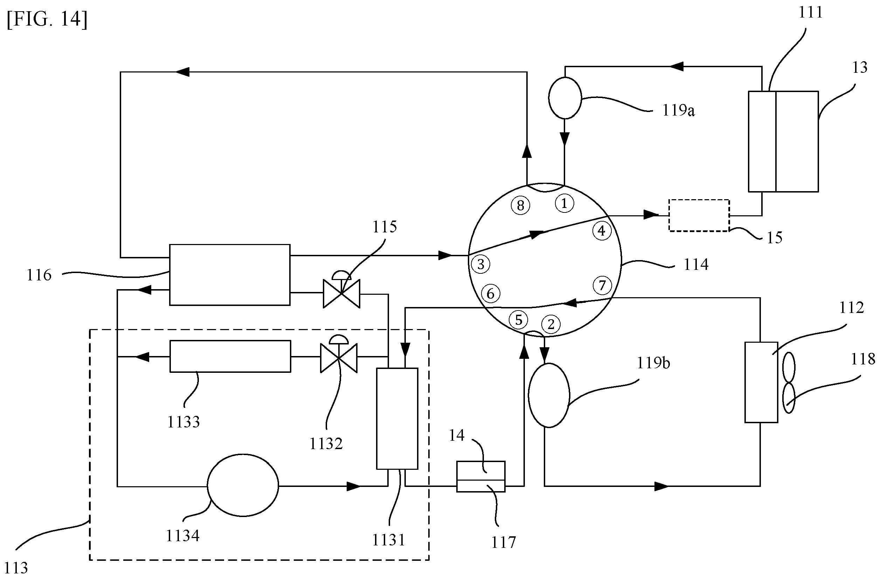

For example, as shown in FIG. 14, in an example provided in this application, the second heat exchange plate 117 and the condenser 1131 are connected in series in a same pipeline, to reduce two ports. In other words, in the example provided in this application, the valve body 114 has eight ports, and each port can be connected to or disconnected from at least one of other ports. Alternatively, it may be understood that each port can be connected to or disconnected from any other port, and each port can be connected to at least two ports. It should be noted that, in the example provided in this application, the second heat exchange plate 117 is located before the condenser 1131, so that the medium first flows through the second heat exchange plate 117, and then flows through the condenser 1131. It is clear that, in another example, the second heat exchange plate 117 may alternatively be located after the condenser 1131. This is not limited in this application.

During actual application, connected states of different ports of the valve body 114 may be effectively adjusted based on an actual requirement.

For example, as shown in FIG. 14, in an example provided in this application, when a temperature of an environment is high (for example, a high temperature and high humidity in summer), an operating mode of the regulation apparatus 11 is as follows:
Specifically, in FIG. 14, four circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the second evaporator 116 may be at a low temperature, to cool the first heat exchange plate 111 (or the battery 13). A flowing path of a refrigerant medium is sequentially: the compressor 1134, the condenser 1131, the second throttle 115, and the second evaporator 116.

In the third circulation path, the second evaporator 116 may cool the first heat exchange plate 111. A flowing path of a medium is sequentially: the first heat exchange plate 111, the water pump 119a, the port 1, the port 8, the second evaporator 116, the port 3, and the port 4.

In the fourth circulation path, the radiator 112 may cool the second heat exchange plate 117 and the condenser 1131. A flowing path of a medium is sequentially: the condenser 1131, the second heat exchange plate 117, the port 5, the port 2, the water pump 119b, the radiator 112, the port 7, and the port 6.

It should be noted that, in the foregoing examples, the electric heater 15 is in an off state.

In addition, in another example, the radiator 112 may alternatively cool the first heat exchange plate 111. For example, the port 7 of the valve body 114 may be connected to the port 4, and the port 1 may be connected to the port 2. In this case, a flowing path of a medium further includes: the first heat exchange plate 111, the water pump, the port 1, the port 2, the water pump, the radiator 112, the port 7, and the port 4.

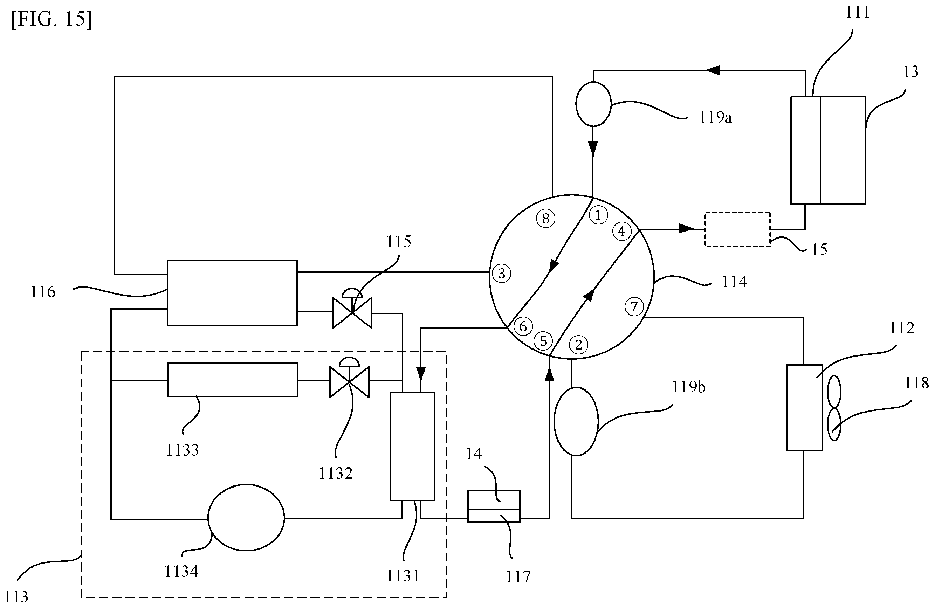

In addition, as shown in FIG. 15, in another example provided in this application, when a temperature of an environment is low (for example, a low temperature in winter), an operating mode of the regulation apparatus 11 is as follows:
Specifically, in FIG. 15, one circulation path is shown. The second heat exchange plate 117 may heat the first heat exchange plate 111 (or the battery 13). A flowing path of a medium is sequentially: the first heat exchange plate 111, the water pump, the port 1, the port 6, the condenser 1131, the second heat exchange plate 117, the port 5, the port 4, and the electric heater.

It should be noted that, during actual application, the second throttle 115 may be set to an open state and the compressor 1134 may be set to an enabled state based on a requirement. In other words, based on a working principle of the heat pump, the condenser 1131 may be at a high temperature, to provide heat energy for the first heat exchange plate 111. In addition, the electric heater 15 may alternatively be turned on as required, to increase a temperature of the first heat exchange plate 111. Alternatively, it may be understood that when the energy storage device 10 is deployed in an area with a low temperature, the electric heater 15 may be mounted based on an actual requirement. Alternatively, when the energy storage device 10 is deployed in an area with a high temperature, the electric heater 15 may not be mounted, to reduce deployment costs.

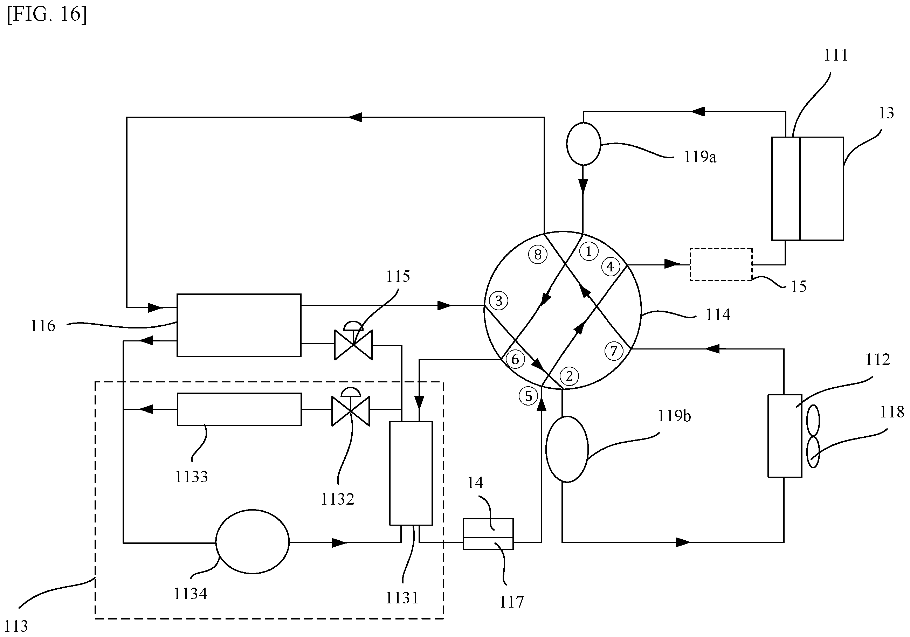

Alternatively, as shown in FIG. 16, in another example provided in this application, when a temperature of an environment is low (for example, a low temperature and high humidity in winter), an operating mode of the regulation apparatus 11 is as follows:
Specifically, in FIG. 16, four circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, a heat pump mode is enabled. The condenser 1131 is at a high temperature, to provide heat for the first heat exchange plate 111 (or the battery 13). A flowing path of a refrigerant medium is sequentially: the compressor 1134, the condenser 1131, the second throttle 115, and the second evaporator 116.

In the third circulation path, the condenser 1131 and the second heat exchange plate 117 may heat the first heat exchange plate 111. A flowing path of a medium is sequentially: the first heat exchange plate 111, the water pump 119a, the port 1, the port 6, the condenser 1131, the second heat exchange plate 117, the port 5, and the port 4.

In the fourth circulation path, the radiator 112 may heat the second evaporator 116. A flowing path of a medium is sequentially: the second evaporator 116, the port 3, the port 2, the water pump 119b, the radiator 112, the port 7, and the port 8. It may be understood that, in the heat pump mode, heat in an environment may be transferred to the condenser 1131 through the second evaporator 116. Therefore, the second evaporator 116 is at a low temperature. The temperature of the second evaporator 116 is increased, to dissipate cold of the second evaporator 116. Heat of the second evaporator 116 may be increased through heat exchange between the radiator 112 and the second evaporator 116.

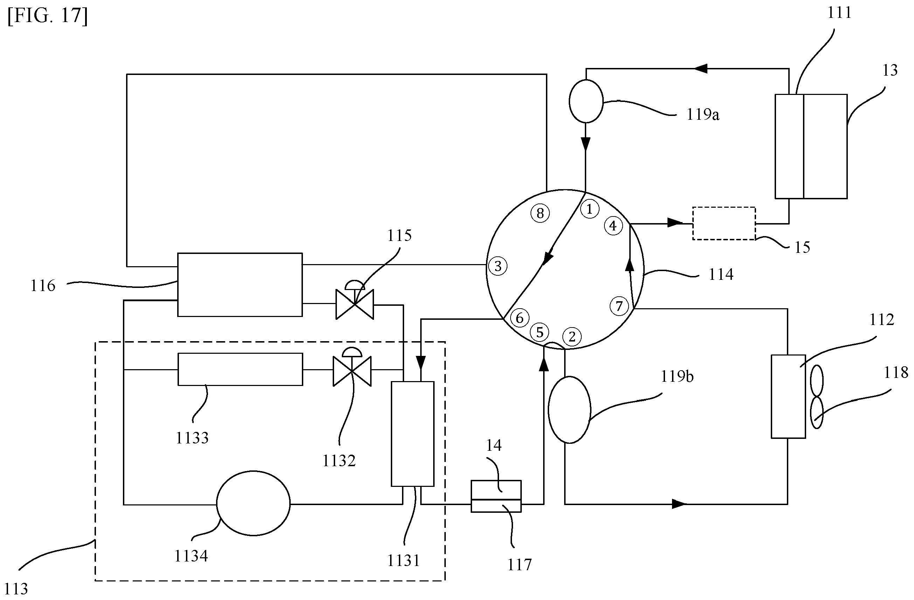

In addition, as shown in FIG. 17, in another example provided in this application, when a temperature of an environment is appropriate (for example, in spring or fall), an operating mode of the regulation apparatus 11 is as follows:
Specifically, in FIG. 17, one circulation path is shown. The radiator 112 may dissipate heat from the first heat exchange plate 111 (or the battery 13) and the second heat exchange plate 117 (or the power conversion system 14). A flowing path of a medium is sequentially: the first heat exchange plate 111, the water pump 119a, the port 1, the port 6, the condenser 1131, the second heat exchange plate 117, the port 5, the port 2, the water pump 119b, the radiator 112, the port 7, and the port 4.

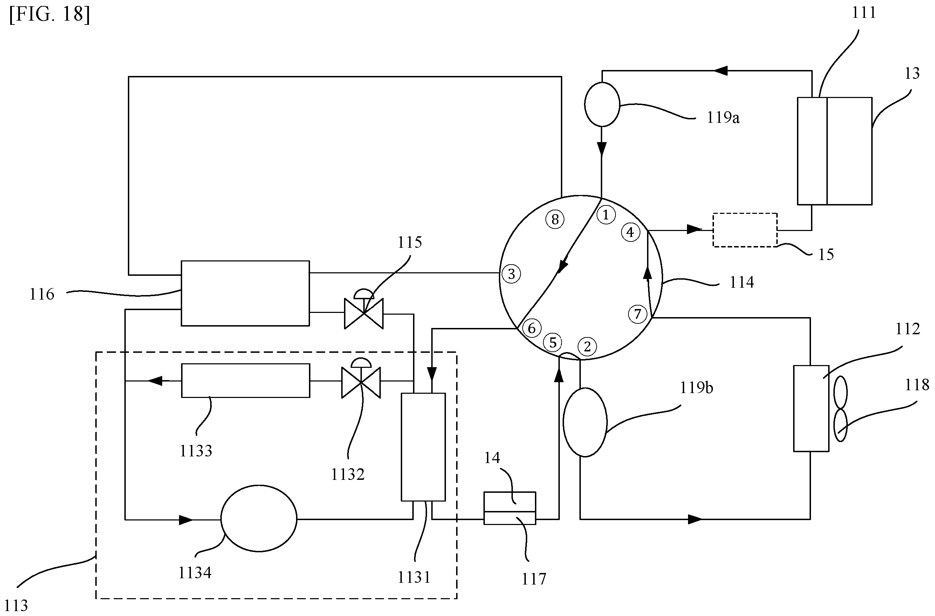

In addition, as shown in FIG. 18, in another example provided in this application, when an environment is at an appropriate temperature (for example, in spring or fall) and of high humidity, an operating mode of the regulation apparatus 11 is as follows:
Specifically, in FIG. 18, three circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the radiator 112 may dissipate heat from the first heat exchange plate 111, the second heat exchange plate 117, and the condenser 1131. A flowing path of a medium is sequentially: the first heat exchange plate 111, the water pump 119a, the port 1, the port 6, the condenser 1131, the second heat exchange plate 117, the port 5, the port 2, the water pump 119b, the radiator 112, the port 7, and the port 4.

It may be understood that, in the foregoing examples, the regulation apparatus 11 uses one valve body 114. In addition, in some examples, there may be two, three, or more valve bodies 114.

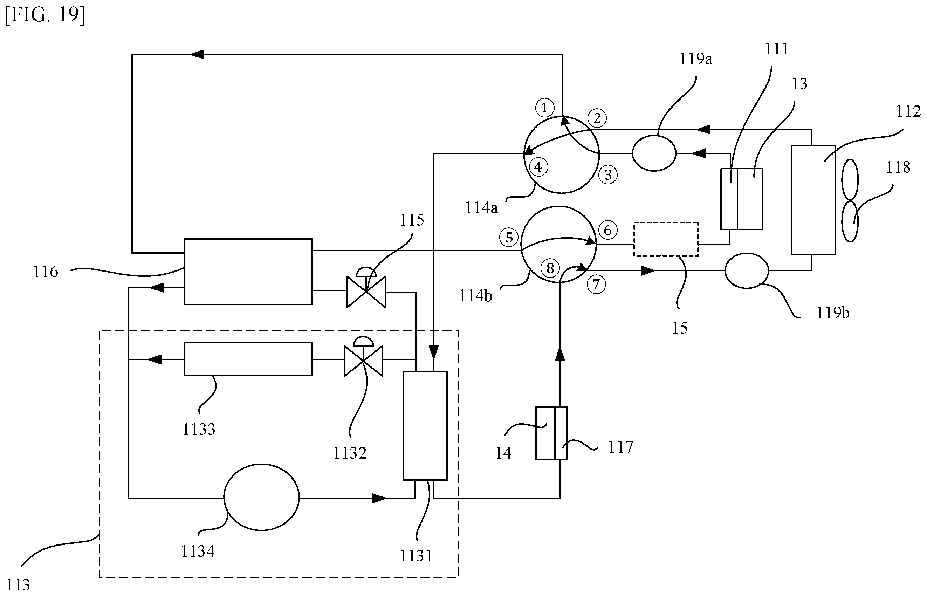

For example, as shown in FIG. 19 to FIG. 24, an embodiment of this application further provides a regulation apparatus including two valve bodies 114.

Specifically, as shown in FIG. 19, the two valve bodies 114 are a valve body 114a and a valve body 114b. Both the valve body 114a and the valve body 114b are four-port valves. In other words, each valve body has four ports, and each port can be connected to or disconnected from at least one of other ports. Alternatively, it may be understood that each port can be connected to or disconnected from any other port, and each port can be connected to at least two ports. Alternatively, it may be understood that two four-port valves may be used to replace the foregoing eight-port valve, so that flexibility is high.

During actual application, connected states of different ports of the valve body may be effectively adjusted based on an actual requirement.

For example, as shown in FIG. 19, in an example provided in this application, when a temperature of an environment is high (for example, a high temperature and high humidity in summer), an operating mode of the regulation apparatus 11 is as follows:
Specifically, in FIG. 19, four circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the second evaporator 116 may be at a low temperature, to cool the first heat exchange plate 111 (or the battery 13). A flowing path of a refrigerant medium is sequentially: the compressor 1134, the condenser 1131, the second throttle 115, and the second evaporator 116.

In the third circulation path, the second evaporator 116 may cool the first heat exchange plate 111. A flowing path of a medium is sequentially: the first heat exchange plate 111, the water pump 119a, the port 3, the port 1, the second evaporator 116, the port 5, and the port 6. The electric heater 15 is in an off state, so that a temperature of the medium is not affected.

In the fourth circulation path, the radiator 112 may cool the condenser 1131 and the second heat exchange plate 117. A flowing path of a medium is sequentially: the condenser 1131, the second heat exchange plate 117, the port 8, the port 7, the water pump 119b, the radiator 112, the port 2, and the port 4.

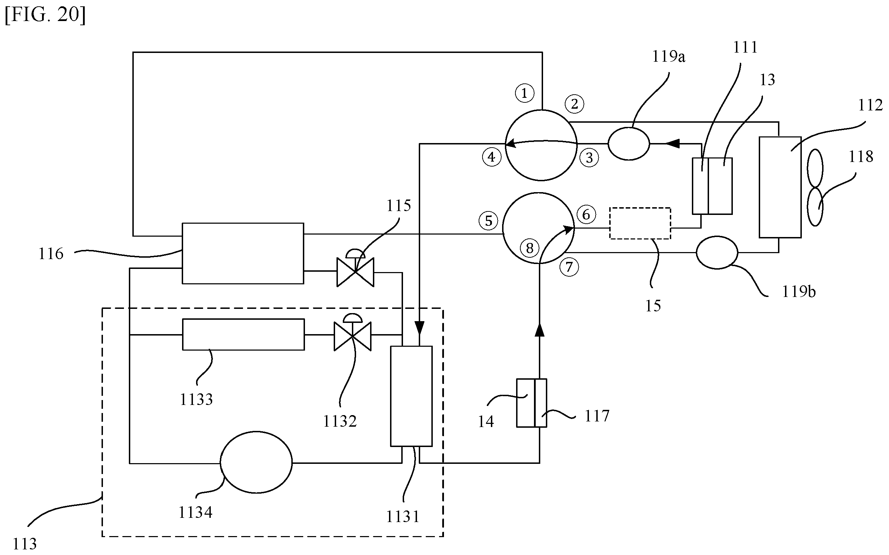

In addition, as shown in FIG. 20, in another example provided in this application, when a temperature of an environment is low (for example, a low temperature in winter), an operating mode of the regulation apparatus 11 is as follows:
Specifically, in FIG. 20, one circulation path is shown. The second heat exchange plate 117 may heat the first heat exchange plate 111 (or the battery 13). A flowing path of a medium is sequentially: the first heat exchange plate 111, the water pump 119a, the port 3, the port 4, the condenser 1131, the second heat exchange plate 117, the port 8, and the port 6.

It should be noted that, during actual application, the second throttle 115 may be set to an open state and the compressor 1134 may be set to an enabled state based on a requirement. In other words, based on a working principle of the heat pump, the condenser 1131 may be at a high temperature, to provide heat energy for the first heat exchange plate 111. In addition, the electric heater 15 may alternatively be turned on as required, to increase a temperature of the first heat exchange plate 111.

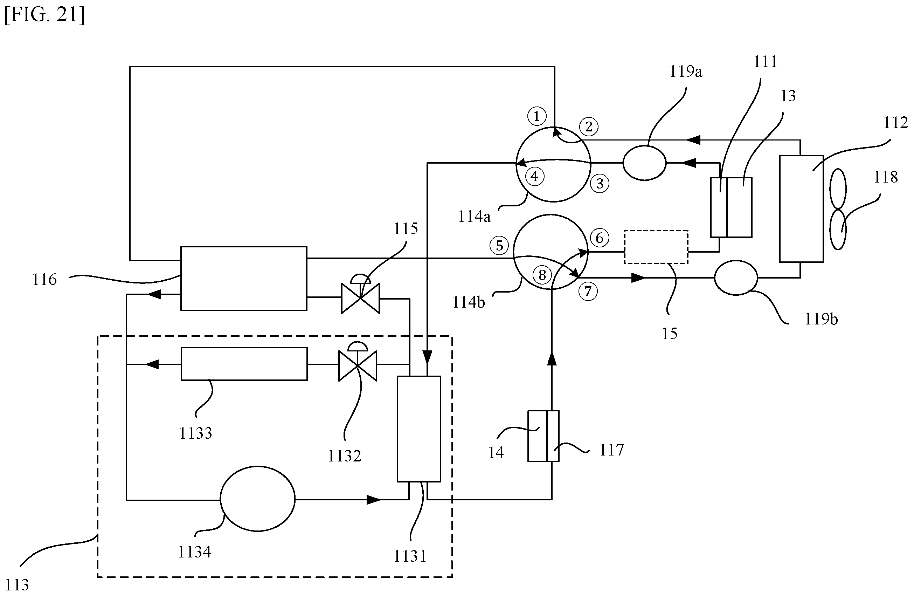

Alternatively, as shown in FIG. 21, in another example provided in this application, when a temperature of an environment is low (for example, a low temperature and high humidity in winter), an operating mode of the regulation apparatus 11 is as follows:
Specifically, in FIG. 21, four circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, a heat pump mode is enabled. The condenser 1131 is at a high temperature, to provide heat for the first heat exchange plate 111 (or the battery 13). A flowing path of a refrigerant medium is sequentially: the compressor 1134, the condenser 1131, the second throttle 115, and the second evaporator 116.

In the third circulation path, the condenser 1131 and the second heat exchange plate 117 may heat the first heat exchange plate 111. A flowing path of a medium is sequentially: the first heat exchange plate 111, the water pump 119a, the port 3, the port 4, the condenser 1131, the second heat exchange plate 117, the port 8, and the port 6.

In the fourth circulation path, the radiator 112 may heat the second evaporator 116. A flowing path of a medium is sequentially: the second evaporator 116, the port 5, the port 7, the water pump 119b, the radiator 112, the port 2, and the port 1. It may be understood that, in the heat pump mode, heat in an environment may be transferred to the condenser 1131 through the second evaporator 116. Therefore, the second evaporator 116 is at a low temperature. The temperature of the second evaporator 116 is increased, to dissipate cold of the second evaporator 116, and the temperature of the second evaporator 116 is increased through heat exchange between the radiator 112 and the second evaporator 116.

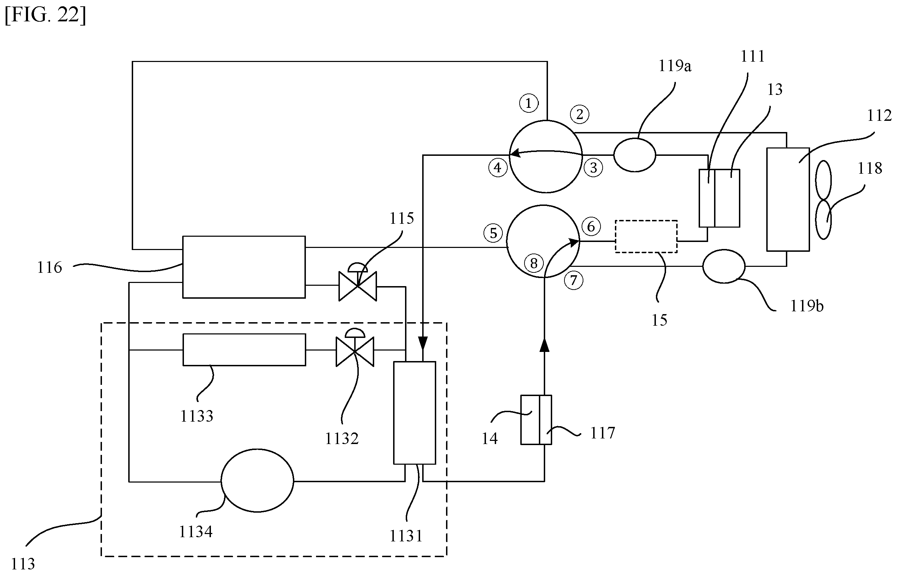

In addition, as shown in FIG. 22, in another example provided in this application, when a temperature of an environment is low (for example, a low temperature in winter), an operating mode of the regulation apparatus 11 is as follows:
Specifically, in FIG. 22, one circulation path is shown. The electric heater 15 and the second heat exchange plate 117 may heat the first heat exchange plate 111 (or the battery 13). A flowing path of a medium is sequentially: the first heat exchange plate 111, the water pump 119a, the port 3, the port 4, the condenser 1131, the second heat exchange plate 117, the port 8, and the port 6.

It should be noted that, during actual application, the second throttle 115 may be in a closed state. Therefore, when the medium flows through the second evaporator 116, the temperature basically does not change. Alternatively, the second throttle 115 may be in an open state and the compressor 1134 may be in an enabled state, to increase a temperature of the condenser 1131. Therefore, the condenser 1131 can heat the first heat exchange plate 111.

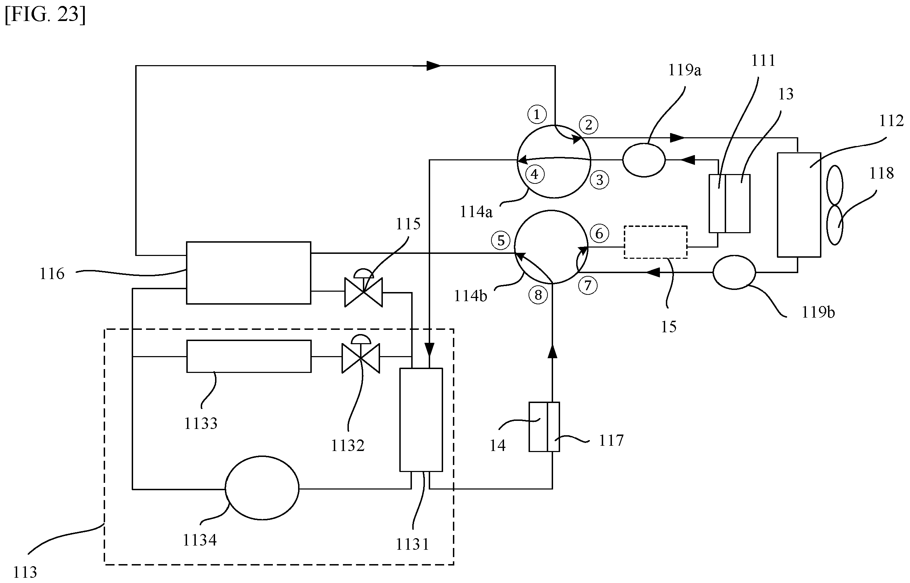

In addition, as shown in FIG. 23, in another example provided in this application, when a temperature of an environment is appropriate (for example, in spring or fall), an operating mode of the regulation apparatus 11 is as follows:
Specifically, in FIG. 23, one circulation path is shown. The radiator 112 may dissipate heat from the first heat exchange plate 111 (or the battery 13) and the second heat exchange plate 117 (or the power conversion system 14). A flowing path of a medium is sequentially: the first heat exchange plate 111, the water pump 119a, the port 3, the port 4, the condenser 1131, the second heat exchange plate 117, the port 8, the port 5, the port 1, the port 2, the radiator 112, the water pump 119b, the port 7, and the port 6.

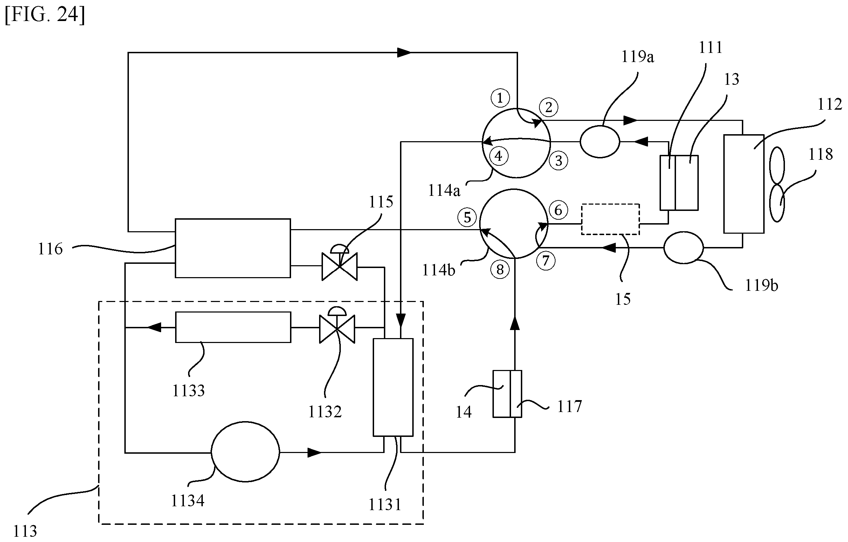

In addition, as shown in FIG. 24, in another example provided in this application, when an environment is at an appropriate temperature (for example, in spring or fall) and of high humidity, an operating mode of the regulation apparatus 11 is as follows:
Specifically, in FIG. 24, two circulation paths are shown.

In the first circulation path, the dehumidification component 113 may perform dehumidification. A flowing path of a refrigerant medium is sequentially: the compressor 1134, the condenser 1131, the first throttle 1132, and the first evaporator 1133.

In the second circulation path, the radiator 112 may dissipate heat from the first heat exchange plate 111, the second heat exchange plate 117, and the condenser 1131. A flowing path of a medium is sequentially: the first heat exchange plate 111, the water pump 119a, the port 3, the port 4, the condenser 1131, the second heat exchange plate 117, the port 8, the port 5, the second evaporator 116, the port 1, the port 2, the radiator 112, the water pump 119b, the port 7, and the port 6.

It may be understood that, in another example, the regulation apparatus 11 may alternatively include three or more valve bodies. Each valve body may include two or more ports. Details are not described herein. In addition, alternatively, interconnected states of different ports of the valve body may be flexibly set based on an actual requirement, to adjust a flowing path of the medium. During actual application, the battery 13 may be used in scenarios such as home energy storage, industrial energy storage, a data center, and a vehicle, and is configured to store and release electric energy.

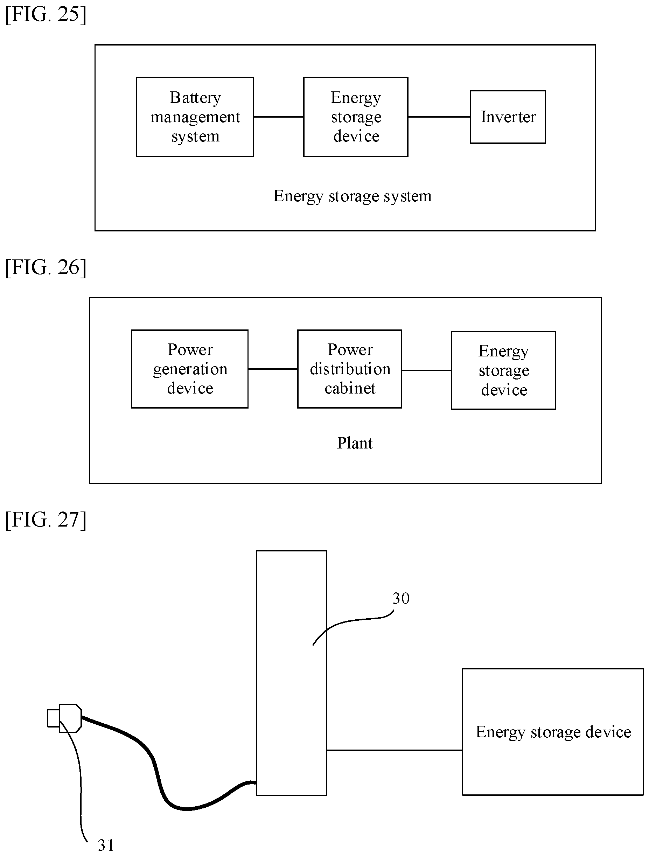

For example, as shown in FIG. 25, an embodiment of this application further provides an energy storage system, including an inverter and a battery. The inverter is electrically connected to the battery, and is configured to convert an alternating current into a direct current and provide the direct current for the battery, or convert a direct current from the battery into an alternating current. In addition, the energy storage system may further include a battery management system. The battery management system may effectively detect parameters such as a temperature, a state of charge, and a state of health of the battery, and may further effectively regulate charging and discharging functions of the battery, to ensure normal operating of the energy storage device 10.

Alternatively, as shown in FIG. 26, an embodiment of this application further provides a power plant, including a power generation device and a battery. The power generation device is electrically connected to the battery, and the power generation device is configured to store generated electric energy in the battery. The battery is used, to effectively improve safety of the power plant and reduce deployment difficulty of the power plant.

During specific application, the power generation device may be a photovoltaic power generation device, a wind power generation device, or the like. A specific type of the power generation device is not limited in this application. In addition, during actual application, the power generation device may alternatively be connected to the battery through a power distribution cabinet. The power distribution cabinet may include a direct current-alternating current conversion component, or a component like a transformer, to effectively transmit electric energy generated by the power generation device to the battery for storage. During specific disposing, a quantity and types of components in the power distribution cabinet may be properly set based on an actual requirement. This is not limited in this application.

Alternatively, as shown in FIG. 27, an embodiment of this application further provides a charging network, including a charging pile 30 and a battery. The charging pile 30 is electrically connected to the battery through a cable, and the battery may provide electric energy stored in the battery for the charging pile 30. The charging pile 30 has a connector 31, and the connector 31 may be connected to a powered device (for example, a vehicle), to supplement energy to the powered device. The battery is used, to effectively improve safety of the charging network, and help improve flexibility of deploying the charging network.

During specific disposing, the charging network may include a plurality of batteries and a plurality of charging piles 30, and each battery may provide electric energy for the plurality of charging piles 30, to effectively improve deployment flexibility.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage device, comprising a regulation apparatus, a cabin, and a battery located in the cabin, wherein the regulation apparatus comprises:
a first heat exchange plate, disposed in the cabin and in thermally conductive contact with the battery;
a radiator;
a compressor, a condenser, a first throttle, and an evaporator that sequentially and circularly communicate with each other through a pipeline, wherein the evaporator is located in the cabin, wherein
the evaporator is configured to condense water vapor in the cabin, and when a path between the evaporator and the first heat exchange plate is connected, the evaporator is further configured to cool the first heat exchange plate; and
a valve body component, connected between the first heat exchange plate and the radiator, and configured to connect or disconnect a path between the first heat exchange plate and the radiator.

2. The energy storage device according to claim 1, wherein the valve body component is further connected between the radiator and the condenser, and is configured to connect or disconnect a path between the radiator and the condenser.

3. The energy storage device according to claim 1 or 2, wherein the regulation apparatus further comprises a humidity detector and a controller;
the humidity detector is disposed in the cabin and is configured to detect humidity in the cabin; and
the controller is communicatively connected to the humidity detector, the first throttle, and the compressor, and the controller is configured to control, based on a detection signal of the humidity detector, the first throttle to be opened or closed and the compressor to be enabled or disabled.

4. The energy storage device according to any one of claims 1 to 3, wherein
the valve body component is further connected between the condenser and the first heat exchange plate, and is configured to connect or disconnect a path between the condenser and the first heat exchange plate.

5. The energy storage device according to claim 4, wherein the valve body component is further connected between the evaporator and the first heat exchange plate, and is configured to connect or disconnect a path between the evaporator and the first heat exchange plate.

6. The energy storage device according to any one of claims 1 to 5, further comprising a second heat exchange plate and a power conversion system, wherein the second heat exchange plate is in thermally conductive contact with the power conversion system; and
the power conversion system is connected to the battery, and is configured to control charging or discharging of the battery.

7. The energy storage device according to claim 6, wherein the valve body component is further connected between the second heat exchange plate and the first heat exchange plate, and is configured to connect or disconnect a path between the first heat exchange plate and the second heat exchange plate.

8. The energy storage device according to claim 6 or 7, wherein the valve body component is further connected between the second heat exchange plate and the radiator, and is configured to connect or disconnect a path between the second heat exchange plate and the radiator.

9. The energy storage device according to any one of claims 6 to 8, wherein the valve body component is further connected between the second heat exchange plate and the condenser, and is configured to connect or disconnect a path between the second heat exchange plate and the condenser.

10. The energy storage device according to claim 6, wherein the second heat exchange plate, the condenser, and the valve body component are connected in series.

11. The energy storage device according to any one of claims 1 to 10, further comprising an electric heater, wherein the electric heater is configured to heat a medium flowing through the first heat exchange plate.

12. The energy storage device according to any one of claims 1 to 11, wherein the valve body component comprises one valve body, the valve body has a plurality of ports, and each port can be connected to or disconnected from at least one of other ports.

13. The energy storage device according to any one of claims 1 to 11, wherein the valve body component comprises at least two valve bodies, each valve body has a plurality of ports, and each port of each valve body can be connected to or disconnected from at least one of other ports.

14. An energy storage system, comprising an inverter and the energy storage device according to any one of claims 1 to 13, wherein the inverter is electrically connected to the energy storage device, and is configured to: convert an alternating current into a direct current and provide the direct current for the energy storage device, or convert a direct current from the energy storage device into an alternating current.

15. A power plant, comprising a power generation device and the energy storage device according to any one of claims 1 to 13, wherein the power generation device is electrically connected to the energy storage device, and the power generation device is configured to store generated electric energy into a battery of the energy storage device.

16. A charging network, comprising a charging pile and the energy storage device according to any one of claims 1 to 13, wherein the charging pile is electrically connected to the energy storage device, and a battery of the energy storage device is configured to provide electric energy for the charging pile.
